# FASCICULE DE BREVET EUROPEEN

(11) **EP 3 797 051 B1**
(45) Date de publication et mention de la délivrance du brevet: **04.05.2022**
(21) Numéro de dépôt: 19720956.2
(22) Date de dépôt: 29.03.2019
(51) Int. Cl.: B60P 3/42, B60R 3/02, B60J 5/02, B60R 21/13, B62D 63/02

(54) **VEHICULE MODULAIRE**
MODULARES FAHRZEUG
MODULAR VEHICLE

(30) Priorité: 23.05.2018 FR 1854271
(43) Date de publication de la demande: 31.03.2021
(73) Titulaire: Soframe Societe Francaise de Materiel, 67980 Hangenbieten (FR)
(72) Inventeur: BINDER, Christophe, 67120 ERNOLSHEIM-BRUCHE (FR)
(74) Mandataire: Merckling, Norbert
(86) Numéro de dépôt international: PCT/FR2019/050733
(87) Numéro de publication internationale: WO 2019/224435

(56) Documents cités:
- WO-A2-2011/112233
- US-A1- 2017 197 679

## Description

### Domaine technique

La présente invention se rapporte au domaine des véhicules pouvant être utilisés selon une première configuration destinée au transport de personnes et selon une seconde configuration destinée au transport de marchandises.

L'invention concerne plus particulièrement un véhicule prévu pour pouvoir à la fois être utilisé en tant que véhicule autonome, téléguidé ou piloté pour le transport de marchandises et être utilisé en tant que véhicule autonome, téléguidé ou piloté pour le transport de personnes.

### Etat de la technique

Il existe des véhicules autonomes pour le transport de marchandises se présentant sous la forme d'une plateforme de transport autonome sur laquelle divers éléments peuvent être montés de manière amovible afin de proposer plusieurs configurations pour la plateforme. Une telle plateforme peut par exemple être convertie en véhicule de transport de personnes en montant des sièges et une cabine de pilotage sur celle-ci.

La modularité d'un tel véhicule est donc obtenue par l'ajout et le retrait de divers éléments montés de manière amovible sur la plateforme. Lorsque ce véhicule est utilisé sur un terrain d'opération et que l'utilisateur souhaite en changer la configuration, il doit donc retirer les éléments qu'il ne souhaite plus utilisé et doit mettre en place les nouveaux éléments dont il a besoin sur la plateforme. Cela nécessite des opérations fastidieuses de démontage, de retrait, de mise en place et de remontage, qui nécessitent généralement l'utilisation d'un moyen de levage en raison du poids des éléments à manipuler. Cela nécessite également un espace de stockage pour les différents éléments amovibles et implique que les éléments amovibles qui ne sont pas montés sur la plateforme doivent être transportés à part, à bord d'un autre véhicule.

Ainsi, bien que le caractère modulaire d'un tel véhicule semble à première vue intéressant, il présente cependant de nombreuses contraintes et de nombreux désavantages.

Les documents WO 2011/112233 A2 et US 2017/197679 A1 divulguent des véhicules modulaires selon le préambule de la revendication 1.

### Description de l'invention

L'objet de la présente invention vise par conséquent à pallier les inconvénients de l'art antérieur en proposant un nouveau véhicule modulaire.

Un autre objet de la présente invention vise également à proposer un nouveau véhicule autonome.

Les objets assignés à l'invention sont atteints à l'aide d'un véhicule comportant un poste de conduite équipé d'un siège et d'un plateau de chargement, et présentant au moins deux configurations, à savoir une première configuration dans laquelle le véhicule est prévu pour être utilisé sans conducteur et une seconde configuration dans laquelle le véhicule est prévu pour être utilisé avec un conducteur, ledit véhicule étant caractérisé en ce que :
- le plateau de chargement comprend plusieurs parties mobiles comportant des organes d'articulation pour le montage articulé des parties mobiles sur le véhicule et/ou sur une partie mobile adjacente ;
- dans la première configuration du véhicule, les parties mobiles sont placées en position horizontale avec au moins une partie mobile recouvrant le poste de conduite inaccessible, et le plateau de chargement, au moins partiellement formé par des parties mobiles, est une surface plane qui occupe plus de la moitié de la face supérieure du véhicule ; et
   ▪ dans la seconde configuration du véhicule, au moins une partie mobile du plateau de chargement est déployée vers le haut afin de libérer l'accès au poste de conduite qui est accessible et utilisable pour le conducteur.

Le véhicule selon l'invention est particulièrement avantageux en ce que tous les différents éléments nécessaires au véhicule pour le convertir dans une configuration ou une autre sont tous déjà montés et fixés sur le véhicule. Ces éléments, bien qu'ils puissent être démontés et retirés pour leur maintenance, ne sont pas amovibles comme dans les véhicules antérieurs, mais sont escamotables. Ainsi, le changement d'une configuration ou une autre pour le véhicule ne se fait pas par le retrait ou l'ajout d'éléments, mais par le simple déploiement ou effacement d'éléments, à la manière d'un véhicule « transformable ».

Avantageusement, le changement d'une configuration à une autre pour le véhicule peut se faire manuellement, de manière simple, facile et rapide, sans nécessiter de quelconques outils ou pièces supplémentaires. Aucune pièce ne doit être retirée ou ajoutée pour passer d'une configuration à une autre, ce qui répond au problème de stockage et de transport des pièces amovibles des solutions antérieures. Par sa modularité, le véhicule selon l'invention peut être utilisé pour plusieurs types de missions.

Selon un exemple de mise en œuvre de l'invention, le poste de conduite est fixe et n'est pas déplacé lors d'un passage d'une configuration du véhicule à une autre.

Selon un autre exemple de mise en œuvre de l'invention, dans sa première configuration le véhicule est soit remorqué, soit autonome, soit téléguidé.

Ainsi, en configuration sans conducteur, le véhicule selon l'invention peut avantageusement être utilisé en tant que mulet intelligent et autonome, en tant que simple remorque de transport ou être téléguidé par un opérateur.

En configuration avec conducteur, le véhicule selon l'invention peut avantageusement être piloté par un conducteur ayant pris place dans le poste de conduite où se trouve toutes les commande nécessaires au pilotage du véhicule. Bien que le poste de conduite soit accessible, le véhicule peut aussi être utilisé en tant que mulet intelligent et autonome, en tant que simple remorque de transport ou être téléguidé par un opérateur.

Selon un exemple supplémentaire de mise en œuvre de l'invention, dans la première configuration du véhicule le plateau de chargement est une surface plane qui occupe plus des trois-quarts de la face supérieure du véhicule, préférentiellement plus de 90% de la face supérieure du véhicule et plus préférentiellement essentiellement la totalité de la face supérieure du véhicule.

Ainsi, en configuration sans conducteur, le véhicule selon l'invention se présente avantageusement sous la forme d'un grand plateau roulant de chargement plat et horizontal, dont sensiblement toute la surface supérieure peut être utilisée notamment pour le transport de marchandises ou de blessés.

Selon un exemple de mise en œuvre de l'invention, le véhicule comprend au moins une place supplémentaire pour passager distincte du poste de conduite et équipée d'un siège, au moins une partie mobile pouvant être placée en position horizontale recouvrant ledit siège inaccessible et pouvant être déployée vers le haut afin de libérer l'accès au siège qui est accessible et utilisable pour un passager.

Ainsi, le véhicule permet de transporter des passagers en plus du conducteur, les passagers pouvant alors prendre place dans un siège situé dans un volume dédié qui peut-être est protégé et inaccessible lorsque les parties mobiles recouvrant le siège sont placées en position horizontale.

Selon un autre exemple de mise en œuvre de l'invention, le véhicule comprend un poste de conduite situé à l'avant du véhicule et deux places supplémentaires pour passager prévues chacune à l'arrière du poste de conduite de chacun des côtés du véhicule.

Ainsi, le véhicule permet de transporter deux passagers en plus du conducteur, ce qui correspond à une configuration pour trinôme qui répond avantageusement à des besoins spécifiques pour l'armée moderne. Lorsque le poste de conduite n'est pas accessible ou qu'il n'est pas utilisé, le véhicule permet aussi de transporter un ou deux passagers lorsqu'il est utilisé en tant que mulet intelligent et autonome, en tant que simple remorque de transport ou qu'il est téléguidé par un opérateur.

Selon un exemple supplémentaire de mise en œuvre de l'invention, chaque siège du véhicule comprend une assise située sous le niveau du plateau de chargement quelle que soit la configuration du véhicule, et un dossier rabattable qui est replié et escamoté sous le niveau du plateau de chargement lorsqu'au moins une partie mobile recouvre horizontalement ledit siège, et qui est libéré et redressé afin d'être utilisable lorsque ladite au moins une partie mobile est déployée vers le haut.

Ainsi, l'assise de chaque siège du véhicule est fixe tandis que seuls les dossiers de chaque siège sont escamotables, ce qui permet de conformer un siège très rapidement et très facilement dans le véhicule lorsque nécessaire.

Selon un exemple de mise en œuvre de l'invention, le véhicule comprend en outre des arceaux de sécurité comportant des organes d'articulation pour le montage articulé des arceaux de sécurité sur le véhicule et/ou sur un arceau de sécurité adjacent, lesdits arceaux de sécurité étant escamotés sous ou au niveau du plateau de chargement lorsque le véhicule est dans sa première configuration, et qui sont déployés vers le haut lorsque le véhicule est dans sa seconde configuration afin d'en protéger au moins le conducteur.

Ces arceaux de sécurité, en plus de leur rôle de protection des occupants du véhicule permettent en outre de maintenir en place et de relier entre elles les parties mobiles du plateau de chargement qui ont été déployées, ce qui procure avantageusement une bonne résistance mécanique à l'ensemble formé par les arceaux de sécurité et les parties mobiles déployées.

Selon un autre exemple de mise en œuvre de l'invention, le véhicule comporte une porte à l'avant du véhicule qui mobile entre une position fermée qui protège le poste de conduite et une position ouverte en basculement vers l'avant et en position basse qui forme un marchepied facilitant l'accès au poste de conduite lorsque le véhicule est dans sa seconde configuration

Cette porte située à l'avant permet ainsi avantageusement de jouer à la fois un rôle classique de porte, de capot protecteur de l'avant et du poste de conduite du véhicule, et de marchepied pour aider le conducteur à grimper dans le poste de conduite.

Selon un exemple de mise en œuvre de l'invention, le plateau de chargement présente des orifices traversants destinés à l'ancrage et/ou à l'amarrage des charges portées sur ledit plateau de chargement.

Ces orifices traversants permettant avantageusement d'arrimer solidement les charges portées sur ledit plateau de chargement de sorte que celles-ci ne soient pas susceptibles de tomber, même lorsque le véhicule est déployé sur le terrain par parachutage ou hélitreuillage, ou lorsqu'il roule sur des terrains fortement accidentés.

Selon un autre exemple de mise en œuvre de l'invention, les parties mobiles du plateau de chargement sont des panneaux rigides montés articulés sur le véhicule ou sur un panneau rigide adjacent et mobiles entre une position horizontale et une position déployée vers le haut.

Le montage articulé des panneaux rigides permet avantageusement de les déployer ou de les replier rapidement et facilement de sorte que le passage d'une configuration à une autre du véhicule soit simple et rapide.

Selon un exemple supplémentaire de mise en œuvre de l'invention, lorsqu'au moins deux panneaux rigides articulés entre eux sont déployés vers le haut pour libérer l'accès à un siège, le panneau rigide le plus bas est positionné sensiblement vertical à l'arrière du dudit siège tandis que le panneau rigide le plus haut est positionné sensiblement horizontal au-dessus dudit siège.

Ainsi, pour chaque siège dont l'accès est libéré, un premier panneau rigide vient se placer derrière le siège tandis qu'un autre panneau rigide articulé au premier vient se placer au-dessus du siège, ce qui offre avantageusement une protection supplémentaire pour l'occupant dudit siège.

Selon un exemple de mise en œuvre de l'invention, les panneaux rigides sont en métal ou en matériau composite.

Ainsi, lorsqu'ils sont déployés, ces panneaux offrent une grande protection vis-à-vis des chocs et des projectiles pour les occupants du véhicule, et ils offrent une bonne rigidité et une bonne résistance mécanique à l'ensemble formé par les arceaux de sécurité et les parties mobiles déployées.

Selon un autre exemple de mise en œuvre de l'invention, une partie mobile du plateau de chargement renferme un dispositif électronique nécessaire pour le téléguidage du véhicule et/ou pour le fonctionnement dudit véhicule en mode autonome et/ou pour les radiocommunications du véhicule.

Ainsi, lorsque la partie mobile renfermant le dispositif électronique est déployée vers le haut, ledit dispositif électronique se trouve situé en partie supérieure du véhicule, ce qui est généralement avantageux pour son bon fonctionnement.

Selon un exemple supplémentaire de mise en œuvre de l'invention, le véhicule comporte une motorisation électrique, thermique ou hybride, ce qui lui permet de fonctionner en véhicule automobile. Sa motorisation électrique ou hybride lui permet avantageusement de fonctionner en mode furtif. Cette furtivité est également renforcée par une faible voie et une faible empreinte au sol du véhicule.

Le véhicule se prolonge très peu vers l'avant et vers l'arrière au-delà de chacun de ses essieux, il est ainsi très compact et très maniable.

Le véhicule comportant préférentiellement quatre roues directrices avec un angle de braquage très important, le véhicule est avantageusement très maniable et prévu pour pouvoir se déplacer en crabe.

Le véhicule présentant un débattement élevé pour les suspensions et quatre roues motrices, il peut être utilisé sur tous types de terrains.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :

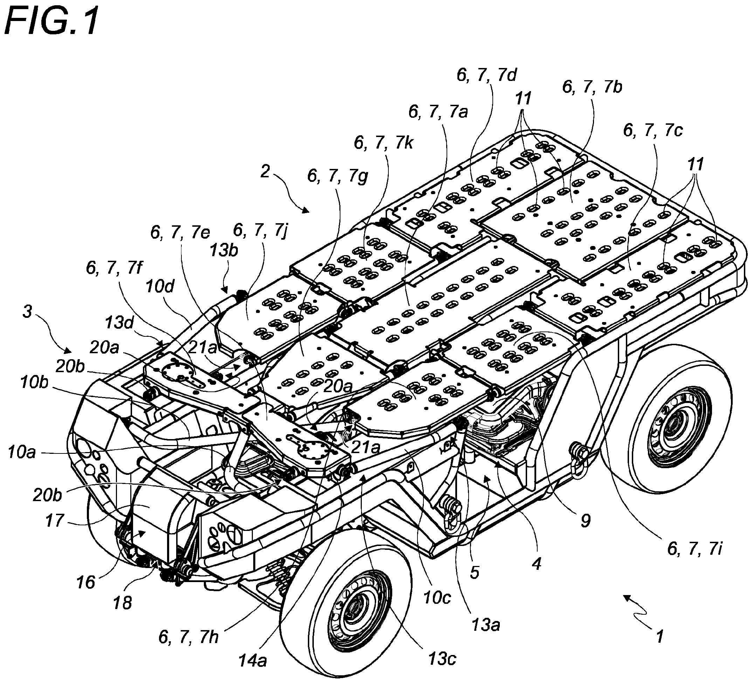

- la figure 1 est une vue en perspective de trois-quarts avant d'un véhicule selon l'invention en configuration « transport de marchandises » dans laquelle aucun siège n'est accessible et dans laquelle la porte située à l'avant est en position fermée ;

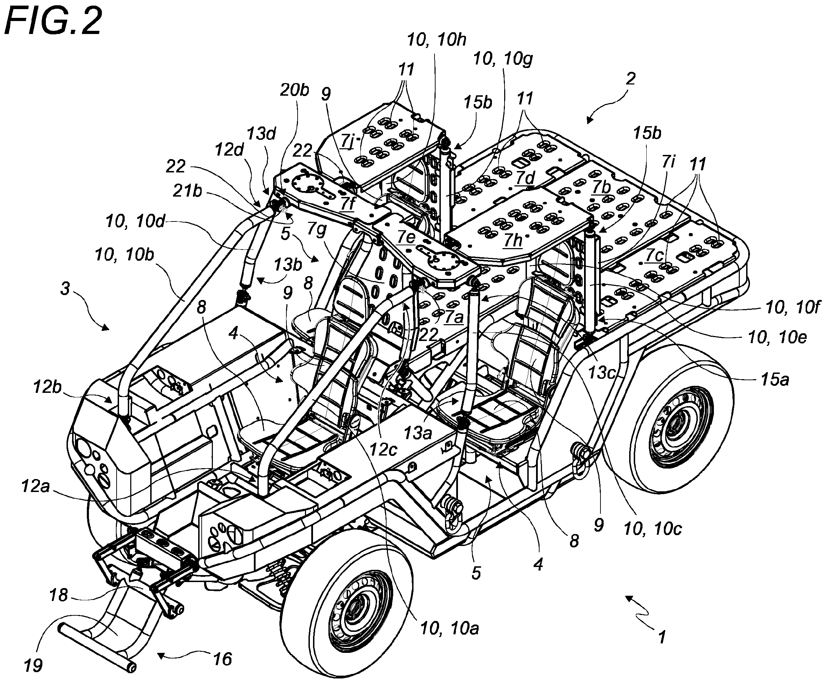

- la figure 2 est une vue en perspective de trois-quarts avant d'un véhicule selon l'invention en configuration « transport de personnes » dans laquelle trois sièges sont accessibles, à savoir un siège pour le conducteur dans le poste de conduite et deux sièges pour des passagers, et dans laquelle la porte située à l'avant est en position ouverte ;

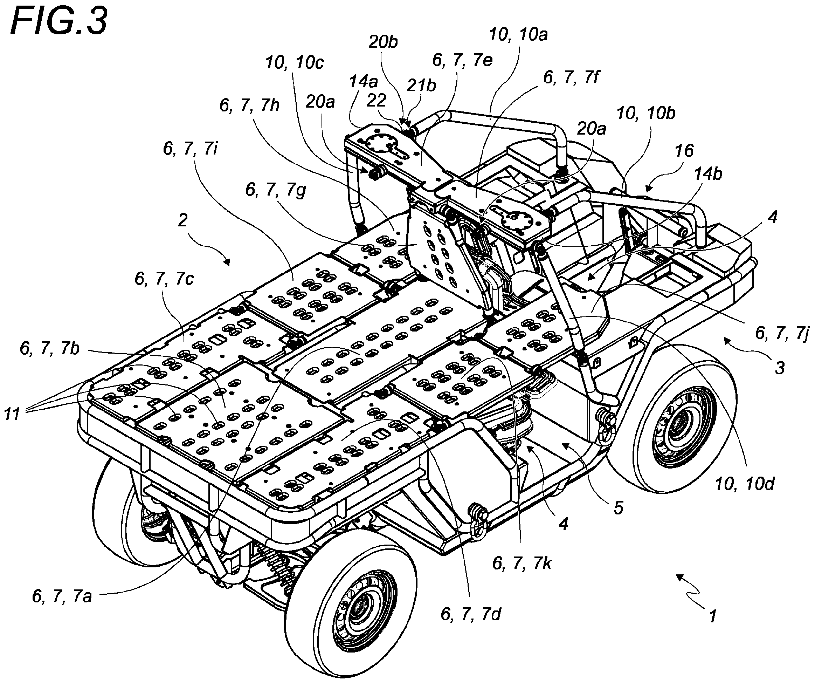

- la figure 3 est une vue en perspective de trois-quarts arrière d'un véhicule selon l'invention dans une configuration intermédiaire dans laquelle seul le siège pour le conducteur du poste de conduite est accessible et dans laquelle la porte située à l'avant est en position fermée ; et

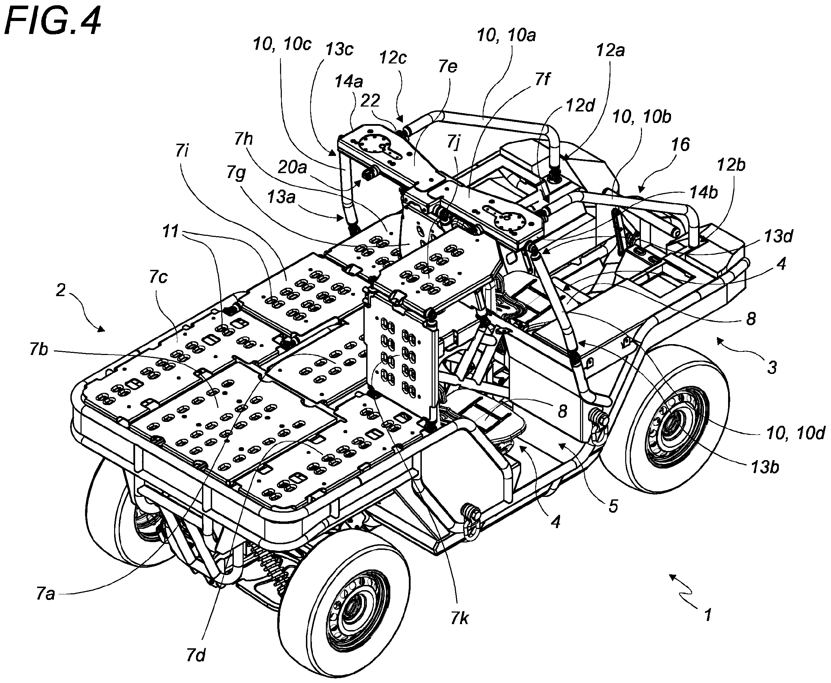

- la figure 4 est une vue en perspective de trois-quarts arrière d'un véhicule selon l'invention en configuration « transport de personnes » dans laquelle deux sièges sont accessibles, à savoir un siège pour le conducteur dans le poste de conduite et un siège pour un passager, et dans laquelle la porte située à l'avant est en position ouverte.

### Mode(s) de réalisation de l'invention

Les éléments structurellement et fonctionnellement identiques présents sur plusieurs figures distinctes, sont affectés d'une même référence numérique ou alphanumérique.

Le véhicule modulaire (1) selon l'invention est préférentiellement un véhicule militaire, mais il peut également intéresser plusieurs domaines d'applications, notamment le domaine de la sécurité civile.

Le véhicule modulaire (1) selon l'invention comporte un plateau de chargement (2) et un poste de conduite (3) pourvu d'un siège (4) situé sous le plateau de chargement (2).

Le véhicule (1) selon l'invention comporte préférentiellement au moins une place supplémentaire (5), préférentiellement deux, pourvues chacune d'un siège (4) pour un passager. Les deux places supplémentaires (5) pour passager sont préférentiellement prévues chacune à l'arrière du poste de conduite (3) de chacun des côtés du véhicule (1).

Le plateau de chargement (2) comporte au moins une partie mobile (6), préférentiellement plusieurs, qui peuvent être sous la forme de panneaux rigides (7) dont certains sont préférentiellement montés articulés entre eux ou au reste du véhicule modulaire (1).

Le véhicule modulaire (1) est avantageux en ce qu'il peut être utilisé selon au moins deux configurations, à savoir une première configuration dans laquelle le véhicule est prévu pour être utilisé sans conducteur et une seconde configuration dans laquelle le véhicule est prévu pour être utilisé avec un conducteur.

La configuration sans conducteur est généralement désignée en tant que configuration « transport de marchandises » car elle permet d'utiliser tout la surface supérieure du véhicule (1) sous la forme d'un unique et grand plateau de chargement (2) destiné notamment au transport de marchandises ou de blessés.

La configuration avec conducteur est généralement désignée en tant que configuration « transport de personnes » car elle permet d'utiliser au moins une partie du véhicule (1) pour le transport de passagers, avec au moins une partie du plateau de chargement (2) étant convertie en poste de conduite (3) et/ou places supplémentaires (5) pour passager.

Bien entendu, les dénominations « transport de marchandises » et « transport de personnes » ne doivent pas être interprétées de manière restrictive. Par exemple, bien qu'un blessé ne soit pas considéré comme une marchandise, il est évident que la configuration « transport de marchandises » est adaptée au transport de brancards ou de personnes allongées sur le plateau de chargement (2). De même, la configuration « transport de personnes » désigne ici une configuration dans laquelle au moins une personne peut prendre place dans un siège (4) accessible dans le véhicule (1), qu'il s'agisse du conducteur et/ou d'un passager, et cette configuration n'exclue pas le transport concomitant de marchandises ou de blessés.

Le véhicule modulaire (1) est bien entendu prévu pour être très modulaire et pouvoir être utilisé selon de nombreuses configurations intermédiaires.

Il peut par exemple être utilisé avec un poste de conduite (3) et aucune place supplémentaire (5) pour passager afin de pouvoir utiliser une grande partie du plateau de chargement (2) pour le transport de marchandises ou de blessés. Dans ce cas, le véhicule (1) est préférentiellement piloté par le conducteur depuis son poste de conduite (3), bien qu'il puisse également être télécommandé ou fonctionner en mode autonome, c'est-à-dire piloté par une intelligence informatique au moins partiellement embarquée.

A l'inverse, le véhicule (1) peut être utilisé avec le poste de conduite (3) escamoté sous le plateau de chargement (2) et inaccessible, et une ou plusieurs places supplémentaires (5) pour passager utilisables de sorte que le véhicule (1) puisse par exemple être utilisé sans conducteur pour le transport de passager, et éventuellement de marchandises ou de blessés. Dans ce cas, le véhicule (1) est préférentiellement télécommandé ou remorqué, ou fonctionne en mode autonome.

Dans sa configuration « transport de marchandises » le véhicule modulaire (1) se présente sous la forme d'une plateforme automobile ou remorquable dont la face supérieure est formée par le plateau de chargement (2), qui est conformé en une grande surface plane destinée au transport de marchandises. Dans cette configuration, le plateau de chargement (2) est une surface plane qui occupe plus de la moitié de la face supérieure du véhicule (1) et qui recouvre le poste de conduite (3) et les places supplémentaires (5). Le poste de conduite (3) et les places supplémentaires (5) sont alors inaccessibles pour un conducteur ou des passagers.

De manière préféré, en configuration « transport de marchandises » le plateau de chargement (2) est une surface plane qui occupe plus des trois-quarts de la face supérieure du véhicule (1), préférentiellement plus de 90% de la face supérieure du véhicule (1) et plus préférentiellement essentiellement la totalité de la face supérieure du véhicule (1).

Dans sa configuration « transport de personnes » au moins une partie mobile (6) du plateau de chargement (2) est déplacée par rapport à la configuration « transport de marchandises » et le poste de conduite (3) est accessible et utilisable pour le conducteur du véhicule modulaire (1). D'autres parties mobiles (6) du plateau de chargement (2) peuvent être déplacées pour libérer l'accès à une ou plusieurs places supplémentaires (5) pour passager.

Pour le passage en configuration « transport de personnes » du véhicule modulaire (1), les parties mobiles (6) du plateau de chargement (2) sont préférentiellement déplacées par le déploiement vers le haut des panneaux rigides (7).

Pour le passage en configuration « transport de marchandises » du véhicule modulaire (1), les parties mobiles (6) du plateau de chargement (2) sont préférentiellement déplacées par le positionnement des panneaux rigides (7) en position horizontale.

En configuration « transport de marchandises » les parties mobiles (6) du plateau de chargement (2) sont préférentiellement situées toutes dans le même plan horizontal.

Selon le mode de réalisation du véhicule modulaire (1) représenté sur les dessins, en configuration « transport de personnes », une partie du plateau de chargement (2) préférentiellement située à l'arrière des sièges (4) n'est pas déployée vers le haut et peut servir de surface de transport pour diverses charges.

En configuration « transport de personnes » le véhicule (1) peut être autonome ou téléguidé, mais il peut également être conduit de manière classique par un conducteur, ce dernier ayant alors accès à des moyens de commande du véhicule (1) situés dans le poste de conduite (3). Ces moyens de commandes (non représentés) permettent de conduire le véhicule (1) et de le diriger. Ils peuvent comprendre classiquement un jeu de pédales et un volant, ou par exemple un ou plusieurs joysticks.

En configuration « transport de marchandises » le véhicule modulaire (1) peut être remorqué, autonome ou téléguidé.

Pour son fonctionnement autonome, le véhicule (1) peut comprendre différents capteurs et caméras, ainsi qu'une intelligence informatique lui permettant notamment d'interagir avec un utilisateur et de s'adapter à son environnement.

Pour son fonctionnement téléguidé, le véhicule (1) peut comprendre différents moyens de communications, notamment des émetteurs et récepteurs radiofréquences, ainsi que des contrôleurs et des servomoteurs reliés à la motorisation, aux freins et à la direction du véhicule (1).

Contrairement aux véhicules antérieurs dans lesquels divers éléments peuvent être montés de manière amovible afin de proposer plusieurs configurations, le poste de conduite (3) du véhicule (1) selon l'invention est fixe est n'est pas déplacé lors d'un passage d'une configuration du véhicule modulaire (1) à une autre.

De même, tous les sièges (4) du véhicule (1) selon l'invention, à savoir les sièges (4) du poste de conduite (3) et les sièges (4) pour passager, sont préférentiellement à assise (8) fixe et à dossier (9) rabattable.

Par assise fixe on entend que l'assise (8) de chaque siège (4) n'est pas prévue pour être déplacée lors d'un passage d'une configuration du véhicule modulaire (1) à une autre. Bien entendu, l'assise (8) peut être coulissée longitudinalement de manière à adapter le siège (4) à la taille de l'utilisateur. De même, l'assise (8) peut être retirée du véhicule (1) pour son remplacement ou sa maintenance, mais elle doit être distinguée des assises qui peuvent être pivotées et/ou déployées vers le haut, généralement afin d'escamoter complètement un siège (4) dans un logement, comme c'est le cas dans certains véhicules automobiles civils.

Dans chacune des configurations du véhicule modulaire (1) de l'invention, l'assise (8) de chaque siège (4) reste préférentiellement située sous le plan du plateau de chargement (2) dans toutes les configurations du véhicule (1).

Par dossier rabattable on entend que le dossier (9) de chaque siège (4) est monté pivotant par rapport à l'assise (8) de sorte de pouvoir être rabattu sur celle-ci. Ainsi, lorsqu'un siège (4) doit être escamoté sous le plateau de chargement (2), notamment lors du passage en configuration « transport de marchandises » du véhicule (1), le dossier (9) est pivoté vers le bas afin d'être rabattu contre l'assise (8) dudit siège (4) et au moins une partie mobile (6) du plateau de chargement (2) peut être déplacée en position horizontale au-dessus du siège (4).

A l'inverse, lorsqu'un siège (4) doit être déployé afin de pouvoir être utilisé, notamment lors du passage en configuration « transport de personnes » du véhicule modulaire (1), il est tout d'abord nécessaire de déplacer l'au moins une partie mobile (6) du plateau de chargement (2) située au-dessus du siège (4), par exemple en la redressant vers le haut, afin de libérer l'accès au siège (4). Le dossier (9) est alors pivoté vers le haut afin d'être positionné sensiblement verticalement, une partie au moins de celui-ci faisant alors saillie au-dessus du plan du plateau de chargement (2) lorsque ce dernier est considéré en configuration « transport de marchandises ».

Ainsi, tous les sièges (4) du véhicule (1) sont situés sous le plateau de chargement (2) et inaccessibles lorsque le véhicule est en configuration « transport de marchandises ». Lorsque la partie mobile (6) du plateau de chargement (2) située au-dessus d'un siège (4) est déplacée par rapport à la configuration « transport de marchandises », généralement en la déployant vers le haut, ledit siège (4) devient accessible et utilisable.

Comme évoqué précédemment, les parties mobiles (6) du plateau de chargement (2) peuvent être sous la forme de panneaux rigides (7). L'ensemble du plateau de chargement (2) peut également être lui-même constitué de panneaux rigides (7).

Les panneaux rigides (7) sont préférentiellement en métal ou en matériau composite.

Le plateau de chargement (2) comporte préférentiellement des panneaux rigides (7) parmi lesquels des panneaux rigides (7) sont montés articulés sur le véhicule (1) ou sur un panneau rigide (7) adjacent de sorte de pouvoir être positionnés à l'horizontale en configuration « transport de marchandises » du véhicule (1) ou être déployés vers le haut en configuration «transport de personnes », libérant ainsi l'accès au poste de conduite (3) et/ou au siège (4) situé en-dessous.

De manière préférée, au moins deux panneaux rigides (7) articulés entre eux sont situés au-dessus de chaque siège (4). Lorsqu'ils sont déployés vers le haut pour libérer l'accès audit siège (4), le panneau rigide (7) le plus bas est alors positionné sensiblement vertical à l'arrière du dudit siège (4) tandis que le panneau rigide (7) le plus haut est positionné sensiblement horizontal au-dessus dudit siège (4). Ainsi, dans cette dernière position, les panneaux rigides (7) articulés forment une protection pour l'occupant du siège (4) qui le protège à l'arrière du dossier (9) et au-dessus du siège (4), à la manière d'un toit.

Selon un mode de réalisation préféré de l'invention, le véhicule modulaire (1) comporte en outre des arceaux de sécurité (10) qui sont escamotés sous ou au niveau du plateau de chargement (2) lorsque le véhicule modulaire (1) est en configuration « transport de marchandises », et qui sont déployés vers le haut lorsque le véhicule (1) est en configuration «transport de personnes » afin d'en protéger les occupants. Ces arceaux de sécurité (10) sont montés articulés sur le véhicule (1). Ils sont également préférentiellement montés articulés aux panneaux rigides (7) mobiles afin que lorsque les arceaux de sécurité (10) et des panneaux rigides (7) mobiles sont déployés, l'ensemble forme une protection pour le conducteur et les éventuels passagers.

Une partie du matériel électronique du véhicule modulaire (1), par exemple les dispositifs électroniques nécessaires pour le téléguidage du véhicule (1), pour son fonctionnement en mode autonome et/ou pour ses radiocommunications du véhicule peuvent être logés dans un des panneaux rigides (7) qui sont prévus pour être déployés vers le haut. Il s'agit préférentiellement des panneaux rigides (7) qui sont situés au plus haut du véhicule (1) lorsqu'ils sont déployés.

Le plateau de chargement (2) présente préférentiellement des orifices traversants (11) destinés à l'ancrage et/ou à l'amarrage des charges portées sur ledit plateau de chargement (2).

Le véhicule modulaire (1) comporte une motorisation électrique, thermique ou hybride. Selon un mode de réalisation préféré de l'invention, il comporte une motorisation hybride comprenant un moteur thermique et des moteurs-roues.

Selon un mode de réalisation préféré de l'invention, certains panneaux rigides (7) ne sont pas prévus pour être déployés et restent en position horizontale quelle que soit la configuration du véhicule modulaire (1). C'est préférentiellement le cas du panneau rigide central (7, 7a), du panneau rigide médian arrière (7, 7b) et des panneaux rigides latéraux arrière (7, 7c, 7d) du véhicule (1). Le panneau rigide central (7, 7a) et le panneau rigide médian arrière (7, 7b) peuvent abriter la motorisation. Bien que non prévus pour être déployés, tous ces panneaux rigides (7, 7a, 7b, 7c, 7d) sont bien entendus amovibles, notamment afin de pouvoir être retirés pour effectuer une maintenance de la motorisation et ou des batteries.

Selon un mode de réalisation préféré de l'invention, le plateau de chargement (2) comprend les panneaux rigides (7) suivants :
- deux panneaux rigides avant (7, 7e, 7f) disposés transversalement à l'avant du plateau de chargement (2) et reliés entre eux, ces panneaux rigides avant (7, 7e, 7f) étant prévus pour être déployés afin de libérer l'accès au poste de conduite (3) ;
- un panneau rigide central (7, 7a) prévu de manière sensiblement centrale et non prévu pour être déployé, prévu préférentiellement pour être monté au-dessus des batteries du véhicule modulaire (1) pour les protéger ;
- un panneau rigide médian avant (7, 7g) situé entre les deux panneaux rigides (7) avant et le panneau rigide central (7, 7a), ce panneau rigide médian avant (7, 7g) étant préférentiellement monté articulé par sa partie arrière à la partie avant du panneau rigide central (7, 7a) et monté articulé par sa partie avant à la partie arrière des panneaux rigides avant (7, 7e, 7f) pour pouvoir être déployé en position sensiblement verticale afin de libérer l'accès au poste de conduite (3) et de protéger la partie arrière du dossier (9) du siège (4) du conducteur ;
- deux paires de panneaux rigides latéraux intermédiaires (7, 7h, 7i, 7j, 7k), articulés entre eux, chaque paire de panneaux (7, 7h, 7i, 7j, 7k) étant prévue de chaque côté du panneau rigide central (7, 7a) et du panneau rigide médian avant (7, 7g), ces panneaux rigides latéraux intermédiaires (7, 7h, 7i, 7j, 7k) étant prévus pour être déployés afin de libérer l'accès chacun à un siège (4) pour passager, le panneau rigide latéral intermédiaire (7, 7i, 7k) situé le plus en arrière au sein de chaque paire étant prévu pour être déployé sensiblement verticalement derrière le dossier (9) du siège (4), tandis que le panneau rigide latéral intermédiaire (7, 7h, 7j) situé le plus en avant au sein de chaque paire est prévu pour être déployé sensiblement horizontalement au-dessus du siège (4) ;
- un panneau rigide médian arrière (7b) situé derrière le panneau rigide central (7, 7a) et non prévu pour être déployé, prévu préférentiellement pour être monté au-dessus du groupe électrogène et/ou de la motorisation thermique du véhicule modulaire (1) pour les protéger ; et
- deux panneaux rigides latéraux arrière (7, 7c, 7d) situés de chaque côté du panneau rigide (7) médian arrière et non prévus pour être déployés.

En configuration « transport de personnes » du véhicule modulaire (1), lorsque les panneaux rigides latéraux intermédiaires (7, 7h, 7i, 7j, 7k) et les panneaux rigides avant (7, 7e, 7f) sont déployés vers le haut, la partie avant du panneau rigide latéral intermédiaire (7, 7h, 7j) situé le plus en avant au sein de chaque paire est prévu pour être fixé à la partie arrière du panneau rigide avant (7, 7e, 7f) le plus proche. Ainsi, ces panneaux rigides latéraux intermédiaires (7, 7h, 7j) et les panneaux rigides avant (7, 7e, 7f) sont solidarisés de manière à former un toit robuste qui protège à la fois le conducteur et les passagers. Dans ce but, un dispositif de fixation (20a) peut être prévu sur la face arrière de chacun des panneaux rigides avant (7, 7e, 7f), tandis qu'un dispositif de fixation complémentaire (21a) peut être prévu sur la face avant de chacun des panneaux rigides latéraux intermédiaires (7, 7h, 7j) les plus en avant au sein de chaque paire.

Selon un mode de réalisation préféré de l'invention, le plateau de chargement (2) comprend les arceaux de sécurité (10) suivants :
- deux arceaux de sécurité avant (10, 10a, 10b), prévus chacun de chaque côté du véhicule modulaire (1) dans la partie avant de celui-ci, l'extrémité avant (12a, 12b) de chacun de ces arceaux de sécurité (10) étant montée articulée à l'avant du véhicule modulaire (1), tandis que l'extrémité arrière (12c, 12d) de chacun de ces arceaux de sécurité avant (10, 10a, 10b) est prévue pour pouvoir être fixée sur la partie avant d'un des deux panneaux rigides avant (7, 7e, 7f), de sorte que lorsque les deux panneaux rigides avant (7, 7e, 7f) et les arceaux de sécurité avant (10, 10a, 10b) sont déployés, les arceaux de sécurité avant (10, 10a, 10b) peuvent être fixés aux panneaux rigides avant (7, 7e, 7f) de sorte de se trouver déployés inclinés sensiblement à 45° vers l'arrière au-dessus du poste de conduite (3) ;
- deux arceaux de sécurité latéraux (10, 10c, 10d), prévus chacun transversalement de chaque côté du véhicule modulaire (1) dans la partie sensiblement centrale de celui-ci, une première extrémité (13a, 13b) de chacun de ces arceaux de sécurité latéraux (10, 10c, 10d) étant montée articulée sur les flancs latéraux du véhicule modulaire (1), tandis que l'autre extrémité (13c, 13d) de chacun de ces arceaux de sécurité latéraux (10, 10c, 10d) est montée articulée sur la partie latérale externe (14a, 14b) d'un des deux panneaux rigides avant (7, 7e, 7f), de sorte que lorsque les deux panneaux rigides avant (7, 7e, 7f) sont déployés, les arceaux de sécurité latéraux (10, 10c, 10d) sont également déployés verticalement à l'arrière du poste de conduite (3) ; et
- deux paires d'arceaux de sécurité arrière (10, 10e, 10f, 10g, 10h), chaque paire d'arceaux de sécurité arrière (10, 10e, 10f, 10g, 10h) étant prévue transversalement chacune à l'arrière de l'emplacement d'un siège (4) pour passager, une première extrémité (15a) de chacun de ces arceaux de sécurité arrière (10, 10e, 10f, 10g, 10h) au sein de chaque paire étant montée articulée au niveau de la partie avant d'un des deux panneaux rigides latéraux arrière (7, 7c, 7d), tandis que l'autre extrémité (15b) de chacun de ces arceaux de sécurité arrière (10, 10e, 10f, 10g, 10h) au sein de chaque paire est monté articulée au niveau de l'articulation des panneaux rigides latéraux intermédiaires (7, 7h, 7i, 7j, 7k) qui relie le panneau le situé le plus en avant à celui le plus en arrière au sein de chaque paire de panneaux rigides latéraux intermédiaires (7, 7h, 7i, 7j, 7k), de sorte que lorsque les panneaux rigides latéraux intermédiaires (7, 7h, 7i, 7j, 7k) sont déployés, les arceaux de sécurité arrière (10, 10e, 10f, 10g, 10h) sont également déployés verticalement à l'arrière de chaque siège (4) pour passager.

Comme évoqué précédemment, l'extrémité arrière (12c, 12d) de chacun des arceaux de sécurité avant (10, 10a, 10b) est prévue pour pouvoir être fixée sur la partie avant d'un des deux panneaux rigides avant (7, 7e, 7f). Dans ce but, un dispositif de fixation (20b) peut être prévu sur la face avant de chacun des panneaux rigides avant (7, 7e, 7f), tandis qu'un dispositif de fixation complémentaire (21b) peut être prévu au niveau de l'extrémité arrière (12c, 12d) de chacun des arceaux de sécurité avant (10, 10a, 10b).

Les dispositifs de fixation (20a, 20b) et dispositifs de fixation complémentaires (21a, 21b) comprennent préférentiellement des éléments de formes complémentaires prévus pour leur engagement mutuel et par exemple sécurisés par une goupille (22) une fois assemblés.

Selon un mode de réalisation préféré de l'invention, le véhicule modulaire (1) comprend également une porte (16) située à l'avant, dont la face avant (17) protège le poste de conduite (3) lorsqu'elle est fermée (voir figure 1). Cette porte avant (16) est préférentiellement montée basculante par son extrémité inférieure (18) sur le véhicule modulaire (1). Lorsqu'elle est ouverte (voir figure 2), cette porte avant (16) bascule vers l'avant et en position basse par rapport à sa position fermée. La porte avant (16) dévoile alors sa face arrière (19) vers l'avant du véhicule (1), celle-ci formant alors un marchepied qui facilite l'accès au poste de conduite (3) lorsque le véhicule (1) est en configuration «transport de personnes ».

Il est évident que la présente description ne se limite pas aux exemples explicitement décrits, mais comprend également d'autres modes de réalisation et/ou de mise en œuvre.

Par exemple, bien que le véhicule modulaire (1) selon l'invention soit préférentiellement un véhicule routier équipé de roue, le principe de modularité de l'invention peut également s'adapter à tout type de véhicule, par exemple routier à chenilles, naval, aérien ou autre.

## Revendications

1. Véhicule modulaire (1) comportant un poste de conduite (3) équipé d'un siège (4) et un plateau de chargement (2), et présentant au moins deux configurations, à savoir une première configuration dans laquelle le véhicule (1) est prévu pour être utilisé sans conducteur et une seconde configuration dans laquelle le véhicule (1) est prévu pour être utilisé avec un conducteur, ledit véhicule (1) étant **caractérisé en ce que** :
• le plateau de chargement (2) comprend plusieurs parties mobiles (6) comportant des organes d'articulation pour le montage articulé des parties mobiles (6) sur le véhicule (1) et/ou sur une partie mobile (6) adjacente ;
• dans la première configuration du véhicule (1), les parties mobiles (6) sont placées en position horizontale avec au moins une partie mobile (6) recouvrant le poste de conduite (3) inaccessible, et le plateau de chargement (2), au moins partiellement formé par des parties mobiles (6), est une surface plane qui occupe plus de la moitié de la face supérieure du véhicule (1) ; et
• dans la seconde configuration du véhicule (1), au moins une partie mobile (6) du plateau de chargement (2) est déployée vers le haut afin de libérer l'accès au poste de conduite (3) qui est accessible et utilisable pour le conducteur.

2. Véhicule modulaire (1) selon la revendication 1, **caractérisé en ce que** le poste de conduite (3) est fixe et n'est pas déplacé lors d'un passage d'une configuration du véhicule (1) à une autre.

3. Véhicule modulaire (1) selon l'une quelconque des revendications précédentes, **caractérisé en ce que** dans sa première configuration le véhicule (1) est soit remorqué, soit autonome, soit téléguidé.

4. Véhicule modulaire (1) selon l'une quelconque des revendications précédentes, **caractérisé en ce que** dans la première configuration du véhicule (1) le plateau de chargement (2) est une surface plane qui occupe plus des trois-quarts de la face supérieure du véhicule (1), préférentiellement plus de 90% de la face supérieure du véhicule (1) et plus préférentiellement essentiellement la totalité de la face supérieure du véhicule (1).

5. Véhicule modulaire (1) selon l'une quelconque des revendications précédentes, **caractérisé en ce qu'**il comprend au moins une place supplémentaire (5) pour passager distincte du poste de conduite (3) et équipée d'un siège (4), au moins une partie mobile (6) pouvant être placée en position horizontale recouvrant ledit siège (4) inaccessible et pouvant être déployée vers le haut afin de libérer l'accès au siège (4) qui est accessible et utilisable pour un passager.

6. Véhicule modulaire (1) selon la revendication précédente, **caractérisé en ce qu'**il comprend un poste de conduite (3) situé à l'avant du véhicule (1) et deux places supplémentaires (5) pour passager prévues chacune à l'arrière du poste de conduite (3) de chacun des côtés du véhicule (1).

7. Véhicule modulaire (1) selon l'une quelconque des revendications précédentes, **caractérisé en ce que** chaque siège (4) du véhicule (1) comprend une assise (8) située sous le niveau du plateau de chargement (2) quelle que soit la configuration du véhicule (1), et un dossier (9) rabattable qui est replié et escamoté sous le niveau du plateau de chargement (2) lorsqu'au moins une partie mobile (6) recouvre horizontalement ledit siège (4), et qui est libéré et redressé afin d'être utilisable lorsque ladite au moins une partie mobile (6) est déployée vers le haut.

8. Véhicule modulaire (1) selon l'une quelconque des revendications précédentes, **caractérisé en ce qu'**il comprend en outre des arceaux de sécurité (10) comportant des organes d'articulation pour le montage articulé des arceaux de sécurité (10) sur le véhicule (1) et/ou sur un arceau de sécurité (10) adjacent, lesdits arceaux de sécurité (10) étant escamotés sous ou au niveau du plateau de chargement (2) lorsque le véhicule (1) est dans sa première configuration, et qui sont déployés vers le haut lorsque le véhicule (1) est dans sa seconde configuration afin d'en protéger au moins le conducteur.

9. Véhicule modulaire (1) selon l'une quelconque des revendications précédentes, **caractérisé en ce qu'**il comporte une porte (16) à l'avant du véhicule (1) qui mobile entre une position fermée qui protège le poste de conduite (3) et une position ouverte en basculement vers l'avant et en position basse qui forme un marchepied facilitant l'accès au poste de conduite (3) lorsque le véhicule (1) est dans sa seconde configuration.

10. Véhicule modulaire (1) selon l'une quelconque des revendications précédentes, **caractérisé en ce que** le plateau de chargement (2) présente des orifices traversants (11) destinés à l'ancrage et/ou à l'amarrage des charges portées sur ledit plateau de chargement (2).

11. Véhicule modulaire (1) selon l'une quelconque des revendications précédentes, **caractérisé en ce que** les parties mobiles (6) du plateau de chargement (2) sont des panneaux rigides (7) montés articulés sur le véhicule (1) ou sur un panneau rigide (7) adjacent et mobiles entre une position horizontale et une position déployée vers le haut.

12. Véhicule modulaire (1) selon la revendication précédente, **caractérisé en ce que** lorsqu'au moins deux panneaux rigides (7) articulés entre eux sont déployés vers le haut pour libérer l'accès à un siège (4), le panneau rigide (7) le plus bas est positionné sensiblement vertical à l'arrière du dudit siège (4) tandis que le panneau rigide (7) le plus haut est positionné sensiblement horizontal au-dessus dudit siège (4).

13. Véhicule modulaire (1) selon l'une quelconque des revendications 11 à 12, **caractérisé en ce que** les panneaux rigides (7) sont en métal ou en matériau composite.

14. Véhicule modulaire (1) selon l'une quelconque des revendications précédentes, **caractérisé en ce qu'**une partie mobile (6) du plateau de chargement (2) renferme un dispositif électronique nécessaire pour le téléguidage du véhicule et/ou pour le fonctionnement dudit véhicule en mode autonome et/ou pour les radiocommunications du véhicule (1).

15. Véhicule modulaire (1) selon l'une quelconque des revendications précédentes, **caractérisé en ce qu'**il comporte une motorisation électrique, thermique ou hybride.

## Patentansprüche

1. Modulares Fahrzeug (1) mit einer Fahrerkabine (3), ausgestattet mit einem Sitz (4) und einer Ladeplatte (2), das mindestens zwei Konfigurationen aufweist, und zwar eine erste Konfiguration, in der das Fahrzeug (1) dazu vorgesehen ist, ohne Fahrer eingesetzt zu werden und eine zweite Konfiguration, in der das Fahrzeug (1) dazu vorgesehen ist, mit einem Fahrer eingesetzt zu werden, dieses Fahrzeug (1) ist **dadurch gekennzeichnet, dass**:
• die Ladeplatte (2) mehrere mobile Teile (6) umfasst, die Gelenkverbindungselemente zur Gelenkmontage der mobilen Teile (6) am Fahrzeug (1) und/ oder an einem benachbarten mobilen Teil (6) enthalten;
• in der ersten Konfiguration des Fahrzeugs (1), werden die mobilen Teile (6) in horizontaler Position angeordnet mit mindestens einem mobilen Teil (6), das die nicht zugängliche Fahrerkabine (3) abdeckt und die Ladeplatte (2), die mindestens teilweise von mobilen Teilen (6) gebildet wird, bildet eine ebene Fläche, die mehr als die Hälfte der Oberseite des Fahrzeugs (1) belegt,; und
• in der zweiten Konfiguration des Fahrzeugs (1), wird mindestens ein mobiles Teil (6) der Ladeplatte (2) nach oben geklappt, um den Zugang zur Fahrerkabine (3) freizugeben, die für den Fahrer zugänglich und nutzbar ist.

2. Modulares Fahrzeug (1) nach Anspruch 1, **dadurch gekennzeichnet, dass** die Fahrerkabine (3) fest ist und beim Übergang von einer Konfiguration des Fahrzeugs (1) in eine andere nicht verschoben wird.

3. Modulares Fahrzeug (1) nach irgendeinem der vorangehenden Ansprüche, **dadurch gekennzeichnet, dass** in der ersten Konfiguration das Fahrzeug (1) entweder angehängt wird, oder autonom oder ferngesteuert wird.

4. Modulares Fahrzeug (1) nach irgendeinem der vorangehenden Ansprüche, **dadurch gekennzeichnet, dass** in der ersten Konfiguration des Fahrzeugs (1) die Ladeplatte (2) eine ebene Fläche bildet, die mehr als drei Viertel der Oberseite des Fahrzeugs (1) belegt, vorzugsweise über 90% der Oberseite des Fahrzeugs (1) und noch besser im Wesentlichen die gesamte Oberfläche des Fahrzeugs (1).

5. Modulares Fahrzeug (1) nach irgendeinem der vorangehenden Ansprüche, **dadurch gekennzeichnet, dass** es mindestens einen zusätzlichen Platz (5) für Passagiere enthält, der sich von der Fahrerkabine (3) unterscheidet, und mit einem Sitz (4) ausgerüstet ist, mindestens ein mobiles Teil (6) kann dabei in die horizontale Position gebracht werden, wodurch dieser Sitz (4) nicht mehr zugänglich ist und es kann nach oben geklappt werden, um den Zugang zu diesem Sitz (4) freizugeben, der nunmehr für einen Passagier zugänglich und nutzbar ist.

6. Modulares Fahrzeug (1) nach dem vorangehenden Anspruch, **dadurch gekennzeichnet, dass** es eine Fahrerkabine (3) umfasst, die sich vorne im Fahrzeug (1) befindet, und zwei zusätzliche Plätze (5) für Passagiere, jeder vorgesehen an der Hinterseite der Fahrerkabine (3) auf jeder der Seiten des Fahrzeugs (1).

7. Modulares Fahrzeug (1) nach irgendeinem der vorangehenden Ansprüche, **dadurch gekennzeichnet, dass** jeder Sitz (4) des Fahrzeugs (1) eine Sitzfläche (8) umfasst, die sich unter dem Niveau der Ladeplatte (2) befindet, ungeachtet der Konfiguration des Fahrzeugs (1), und eine umklappbare Rückenlehne (9), die unter das Niveau der Ladeplatte (2) geklappt und eingeschoben werden kann, wenn mindestens ein mobiles Teil (6) den erwähnten Sitz (4) horizontal bedeckt, der freigegeben und aufgerichtet wird, so dass er benutzbar ist, wenn zumindest ein mobiles Teil (6) nach oben geklappt wird.

8. Modulares Fahrzeug (1) nach irgendeinem der vorangehenden Ansprüche, **dadurch gekennzeichnet, dass** es außerdem Sicherheitsbügel (10) umfasst, die Gelenkverbindungselemente für die Gelenkmontage der Sicherheitsbügel (10) auf dem Fahrzeug (1) und/ oder auf einem daneben befindlichen Sicherheitsbügel (10) umfassen, diese Sicherheitsbügel (10) werden unter oder in Höhe des Niveaus der Ladeplatte (2) eingeschoben, wenn das Fahrzeug (1) sich in seiner ersten Konfiguration befindet und werden nach oben geklappt, wenn sich das Fahrzeug (1) in seiner zweiten Konfiguration befindet, um mindestens den Fahrer zu schützen.

9. Modulares Fahrzeug (1) nach irgendeinem der vorangehenden Ansprüche, **dadurch gekennzeichnet, dass** es eine Tür (16), im vorderen Bereich das Fahrzeugs (1) umfasst, die zwischen einer geschlossenen Position, die die Fahrerkabine (3) schützt und einer offene Position, nach vorne gekippt und in einer unteren Position, die eine Trittstufe bildet, die den Zugang zur Fahrerkabine (3) erleichtert, beweglich ist, wenn sich das Fahrzeug (1) in seiner zweiten Konfiguration befindet.

10. Modulares Fahrzeug (1) nach irgendeinem der vorangehenden Ansprüche, **dadurch gekennzeichnet, dass** die Ladeplatte (2) durchführende Öffnungen (11) enthält, bestimmt zur Verankerung oder Verzurrung der Lasten, die auf dieser Ladeplatte (2) transportiert werden.

11. Modulares Fahrzeug (1) nach irgendeinem der vorangehenden Ansprüche, **dadurch gekennzeichnet, dass** es sich bei den mobilen Teilen (6) der Ladeplatte (2) um starre Platten (7) handelt, über Gelenke an das Fahrzeug (1) oder eine benachbarte starre Platte (7) montiert und beweglich zwischen einer horizontalen Position und einer nach oben ausgeklappten Position.

12. Modulares Fahrzeug (1) nach irgendeinem der vorangehenden Ansprüche, **dadurch gekennzeichnet, dass**, wenn mindestens zwei miteinander über Gelenk verbundene starre Platten (7) nach oben geklappt werden, um den Zugang zu einem Sitz (4) freizugeben, die niedrigste starre Platte (7) im Wesentlichen vertikal positioniert auf der Hinterseite dieses Sitzes (4) ist, während die oberste starre Platte (7) im Wesentlichen horizontal über diesem Sitz (4) montiert ist.

13. Modulares Fahrzeug (1) nach irgendeinem der vorangehenden Ansprüche 11 bis 12, **dadurch gekennzeichnet, dass** die starren Platten (7) aus Metall oder Verbundmaterial bestehen.

14. Modulares Fahrzeug (1) nach irgendeinem der vorangehenden Ansprüche, **dadurch gekennzeichnet, dass** ein mobiles Teil (6) der Ladeplatte (2) eine notwendige elektronische Vorrichtung für die Fernsteuerung des Fahrzeugs und/ oder für den Betrieb dieses Fahrzeug im autonomen Modus und/ oder für den Funkverkehr des Fahrzeugs (1) enthält.

15. Modulares Fahrzeug (1) nach irgendeinem der vorangehenden Ansprüche, **dadurch gekennzeichnet, dass** es einen elektrischen, einen Verbrennungs- oder einen Hybridmotor enthält.

## Claims

1. Modular vehicle (1) comprising a driver station (3) equipped with a seat (4) and a loading plate (2), and having at least two configurations, namely a first configuration in which the vehicle (1) is intended to be used without a driver and a second configuration in which the vehicle (1) is intended to be used with a driver, said vehicle (1) being **characterised in that**:
• the loading plate (2) comprises several mobile parts (6) comprising articulation members for the articulated mounting of the mobile parts (6) on the vehicle (1) and/or on an adjacent mobile part (6);
• in the first configuration of the vehicle (1), the mobile parts (6) are placed in the horizontal position with at least one mobile part (6) covering the inaccessible driver station (3), and the loading plate (2), at least partially formed by mobile parts (6), is a flat surface which occupies more than half of the upper face of the vehicle (1); and
• in the second configuration of the vehicle (1), at least one mobile part (6) of the loading plate (2) is deployed upwards in order to free up access to the driver station (3) which is accessible and useable for the driver.

2. Modular vehicle (1) according to claim 1, **characterised in that** the driver station (3) is fixed and is not moved during a passage from one configuration of the vehicle (1) to another.

3. Modular vehicle (1) according to any one of the preceding claims, **characterised in that** in its first configuration, the vehicle (1) is either towed, or autonomous, or remote-controlled.

4. Modular vehicle (1) according to any one of the preceding claims, **characterised in that** in the first configuration of the vehicle (1), the loading plate (2) is a flat surface which occupies more than three-quarters of the upper face of the vehicle (1), preferably more than 90% of the upper face of the vehicle (1) and more preferably, essentially all of the upper face of the vehicle (1).

5. Modular vehicle (1) according to any one of the preceding claims, **characterised in that** it comprises at least one additional space (5) for a passenger, separate from the driver station (3) and equipped with a seat (4), at least one mobile part (6) which could be placed in the horizontal position covering said inaccessible seat (4) and which could be deployed upwards, in order to free up access to the seat (4) which is accessible and useable for a passenger.

6. Modular vehicle (1) according to the preceding claim, **characterised in that** it comprises a driver station (3) located at the front of the vehicle (1) and two additional spaces (5) for passengers, each provided to the rear of the driver station (3) on each side of the vehicle (1).

7. Modular vehicle (1) according to any one of the preceding claims, **characterised in that** each seat (4) of the vehicle (1) comprises a base (8) located under the level of the loading plate (2), whatever the configuration of the vehicle (1), and a foldable backrest (9), which is folded and retracted under the level of the loading plate (2) when at least one mobile part (6) horizontally covers said seat (4), and which is released and straightened in order to be useable when said at least one mobile part (6) is deployed upwards.

8. Modular vehicle (1) according to any one of the preceding claims, **characterised in that** it further comprises crash bars (10) comprising articulation members for the articulated mounting of the crash bars (10) on the vehicle (1) and/or on an adjacent crash bar (10), said crash bars (10) being retracted under or at the level of the loading plate (2) when the vehicle (1) is in its first configuration, and which are deployed upwards when the vehicle (1) is in its second configuration in order to protect at least the driver.

9. Modular vehicle (1) according to any one of the preceding claims, **characterised in that** it comprises a door (16) at the front of the vehicle (1) which is mobile between a closed position which protects the driver station (3) and a tilting open position frontwards and in the low position which forms a footboard facilitating access to the driver station (3) when the vehicle (1) is in its second configuration.

10. Modular vehicle (1) according to any one of the preceding claims, **characterised in that** the loading plate (2) has through orifices (11) intended for anchoring and/or docking of loads supported on said loading plate (2).

11. Modular vehicle (1) according to any one of the preceding claims, **characterised in that** the mobile parts (6) of the loading plate (2) are rigid panels (7) mounted articulated on the vehicle (1) or on an adjacent rigid panel (7) and mobile between a horizontal position and a position deployed upwards.

12. Modular vehicle (1) according to the preceding claim, **characterised in that** when at least two rigid panels (7) articulated together are deployed upwards to free up access to a seat (4), the lowest rigid panel (7) is positioned substantially vertical to the rear of said seat (4), while the highest rigid panel (7) is positioned substantially horizontal above said seat (4).

13. Modular vehicle (1) according to any one of claims 11 to 12, **characterised in that** the rigid panels (7) are made of metal or made of composite material.

14. Modular vehicle (1) according to any one of the preceding claims, **characterised in that** a mobile part (6) of the loading plate (2) contains an electronic device necessary for remote controlling of the vehicle and/or for the operating of said vehicle in autonomous mode and/or for the radiocommunications of the vehicle (1).

15. Modular vehicle (1) according to any one of the preceding claims, **characterised in that** it comprises an electric, thermal or hybrid engine.
